# FASCICULE DE BREVET EUROPEEN

(11) **EP 4 110 693 B1**
(45) Date de publication et mention de la délivrance du brevet: **27.03.2024**
(21) Numéro de dépôt: 21707276.8
(22) Date de dépôt: 26.02.2021
(51) Int. Cl.: B64C 25/60, F16F 9/06

(54) **MESURE DE LA PRESSION DANS LA CHAMBRE DE DÉTENTE D'UN AMORTISSEUR ENCAPSULÉ DANS UN ATTERRISSEUR D'AÉRONEF**
MESSEN DES DRUCKS IN DER REGELKAMMER EINES GEKAPSELTEN STOSSDÄMPFERS IN EINEM FLUGZEUGFAHRWERK
MEASURING THE PRESSURE IN THE REGULATION CHAMBER OF AN ENCAPSULATED SHOCK ABSORBER IN AN AIRCRAFT LANDING GEAR

(30) Priorité: 26.02.2020 FR 2001918
(43) Date de publication de la demande: 04.01.2023
(73) Titulaire: Safran Landing Systems, 78140 Vélizy-Villacoublay (FR)
(72) Inventeur: HENRION, Philippe, 77550 MOISSY-CRAMAYEL (FR); LAFITTE, Arnaud, 77550 MOISSY-CRAMAYEL (FR)
(74) Mandataire: Cabinet Boettcher
(86) Numéro de dépôt international: PCT/EP2021/054807
(87) Numéro de publication internationale: WO 2021/170788

(56) Documents cités:
- FR-A1- 2 608 242
- FR-A1- 2 917 371
- US-A1- 2006 220 917
- US-A1- 2016 272 309

## Description

L'invention concerne la mesure de la pression dans la chambre de détente d'un amortisseur dans un atterrisseur d'aéronef à amortisseur encapsulé.

### ARRIERE PLAN DE L'INVENTION

Dans certaines circonstances, et notamment lors des essais en vol, il est utile de connaître la pression régnant dans chacune des chambres d'un amortisseur d'atterrisseur, notamment dans la chambre de détente. Dans les atterrisseurs de type direct dans lesquels le caisson forme l'enveloppe externe de l'amortisseur, la chambre de détente est organisée entre le caisson et la tige coulissante qui porte les roues et qui coulisse dans le caisson, de sorte que la pression dans la chambre de détente peut être mesurée simplement au moyen d'un perçage ménagé dans la paroi du caisson au niveau de la chambre de détente, et de l'adaptation sur cette paroi, en regard dudit perçage, d'un capteur de pression. Cette modification est très simple et ne demande aucune modification de la structure de l'atterrisseur.

Il en va autrement pour les atterrisseurs à amortisseur encapsulé, dans lesquels la tige coulissante qui porte les roues et qui coulisse dans le caisson forme l'enveloppe externe de l'amortisseur. La chambre de détente est alors agencée entre la tige coulissante et une bouteille s'étendant à l'intérieur du caisson, le caisson n'étant pas soumis aux pressions régnant dans l'amortisseur. FR 2 917 371 décrit un procédé de mesure de pression dans un amortisseur d'atterrisseur d'aéronef à amortisseur encapsulé et un atterrisseur d'aéronef à amortisseur encapsulé, comme dans les préambules des revendications 1 et 5, respectivement. Un tel agencement est par exemple utilisé sur l'atterrisseur auxiliaire des avions AIRBUS de type A320. Il n'est dès lors plus possible de mesurer la pression dans la chambre de détente via un perçage dans la paroi du caisson.

### OBJET DE L'INVENTION

L'invention vise à mesurer la pression dans la chambre de détente d'un amortisseur encapsulé d'un atterrisseur d'aéronef.

### PRESENTATION DE L'INVENTION

En vue de la réalisation de ce but, on propose un procédé de mesure de pression dans un amortisseur encapsulé d'un atterrisseur d'aéronef, l'amortisseur comportant une tige coulissante montée à coulissement dans un caisson de l'atterrisseur, et une bouteille s'étendant à l'intérieur du caisson en étant fixée au caisson par une extrémité supérieure et autour de laquelle coulisse la tige coulissante, la bouteille se terminant dans la tige coulissante par un diaphragme qui délimite dans l'amortisseur une chambre d'huile à l'intérieur de la tige coulissante, une chambre mixte dans la bouteille et une chambre de détente s'étendant entre la tige coulissante et la bouteille, le procédé comportant l'étape d'effectuer un perçage de la bouteille au droit de la chambre de détente, et de relier ce perçage à un capteur de pression situé à l'extérieur du caisson au moyen d'un tuyau s'étendant dans la bouteille depuis le perçage jusqu'à l'extrémité supérieure de la bouteille pour mesurer une pression dans la chambre de détente.

Ainsi, la pression dans la chambre de détente est remontée vers le haut du caisson en passant par la bouteille, ce qui permet une surveillance de cette pression, sans modification majeure de l'amortisseur ou de l'atterrisseur.

De préférence, on fait déboucher le tuyau au niveau d'un orifice dans l'extrémité supérieure de la bouteille servant à gonfler l'amortisseur, en équipant l'orifice d'un bloc hydraulique adapté à recevoir un capteur de pression et une vanne de gonflage.

L'invention concerne également un atterrisseur d'aéronef à amortisseur encapsulé, l'amortisseur comportant une tige coulissante montée à coulissement dans un caisson de l'atterrisseur, et une bouteille s'étendant à l'intérieur du caisson en étant fixée au caisson par une extrémité supérieure et autour de laquelle coulisse la tige coulissante, la bouteille se terminant dans la tige coulissante par un diaphragme qui délimite dans l'amortisseur une chambre d'huile à l'intérieur de la tige coulissante, une chambre mixte dans la bouteille, et une chambre de détente s'étendant entre la tige coulissante et la bouteille. Un perçage est ménagé dans la bouteille au droit de la chambre de détente, le perçage étant relié à un capteur de pression situé à l'extérieur du caisson au moyen d'un tuyau s'étendant dans la bouteille depuis le perçage jusqu'à l'extrémité supérieure de la bouteille pour mesurer une pression dans la chambre de détente.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 vue en coupe schématique d'un atterrisseur à amortisseur encapsulé selon l'invention;
- la figure 2 est une vue de détail de la bouteille de l'amortisseur de la figure 1 au niveau du diaphragme ;
- la figure 3 est une vue de détail du haut de la bouteille de l'amortisseur de la figure 1 équipé d'un bloc hydraulique selon l'invention.

### DESCRIPTION DETAILLEE DE L'INVENTION

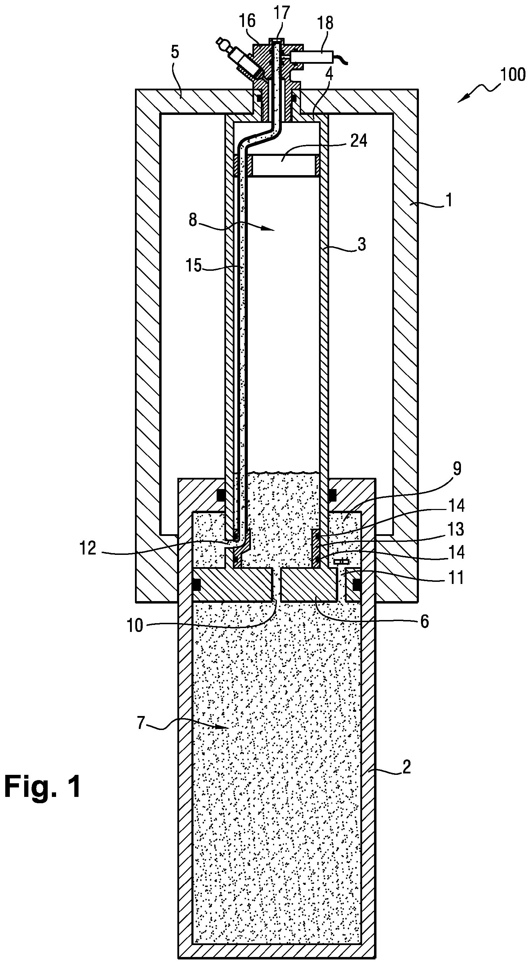

En référence à la figure 1, l'invention s'applique à un atterrisseur d'aéronef 100 comportant un caisson 1 relié à la structure de l'aéronef. En général, le caisson 1 est monté articulé entre une position déployée illustrée ici et une position rétractée dans laquelle l'atterrisseur est logé dans une soute de l'aéronef. Une tige coulissante 2 est montée à coulissement dans le caisson 1 en saillant de celui-ci par une extrémité basse. La tige coulissante 2 porte une ou des roues (non représentées) à son extrémité basse.

Ici, une bouteille 3 s'étendant à l'intérieur du caisson 1 est engagée à coulissement étanche dans la tige coulissante 2 pour former avec celle-ci un amortisseur. La bouteille 3 a une extrémité supérieure 4 fixée à un fond supérieur 5 du caisson, et une extrémité inférieure munie d'un diaphragme 6 définissant dans l'amortisseur ainsi constitué :
- une chambre d'huile 7 s'étendant dans la tige coulissante 2 et remplie de fluide hydraulique ;
- une chambre mixte 8 s'étendant dans la bouteille 3 et contenant du gaz sous pression, par exemple de l'azote, la chambre mixte 8 pouvant potentiellement également contenir du fluide hydraulique en provenance de la chambre d'huile 7 puisque l'amortisseur 100 ne comporte pas ici de séparateur fluide hydraulique/gaz;
- une chambre de détente 9, s'étendant entre la tige coulissante 2 et la bouteille 3, de forme annulaire, également remplie de fluide hydraulique.

Le diaphragme 6 comporte un premier orifice calibré 10 permettant un passage de fluide hydraulique entre la chambre d'huile 7 et la chambre mixte 8, et un deuxième orifice à clapet calibré 11 permettant un passage de fluide hydraulique entre la chambre d'huile 7 et la chambre de détente 9, en laissant le fluide entrer dans la chambre de détente 9 avec peu de résistance, mais opposant une résistance appréciable à la sortie du fluide de la chambre de détente 9

Cette configuration est dite à amortisseur encapsulé, puisque l'ensemble de l'amortisseur est fixé au caisson par l'extrémité supérieure de la bouteille, le caisson lui-même ne subissant pas la pression interne à l'amortisseur.

Le fonctionnement de l'amortisseur encapsulé est le suivant. Lors d'un atterrissage, la tige coulissante 2 est contrainte à s'enfoncer dans le caisson 1, provoquant un transfert de fluide hydraulique de la chambre d'huile 7 vers la chambre mixte 8 à l'encontre de la pression exercée par le gaz occupant la chambre mixte 8. Le passage de fluide au travers du premier orifice calibré 10 génère une résistance à l'enfoncement de la tige coulissante 2. Dans le même temps, une partie du fluide hydraulique expulsé de la chambre d'huile 7 remplit via le deuxième orifice 11 la chambre de détente 9 dont le volume augmente.

Au décollage, les roues sont soudain libérées du poids de l'aéronef. La pression instaurée par le gaz repousse le fluide hydraulique de la chambre mixte 8 vers la chambre d'huile 7, forçant la tige coulissante 2 vers sa position détendue, tandis que le fluide contenu dans la chambre de détente 9 se déverse également dans la chambre d'huile 7 via le clapet calibré du deuxième orifice 11 à une vitesse contrôlée permettant la régulation de la vitesse de déplacement de la tige coulissante 2, ce qui permet d'éviter que celle-ci ne vienne violemment en butée en position détendue.

Tout ceci est bien connu et n'est rappelé que pour situer le contexte de l'invention.

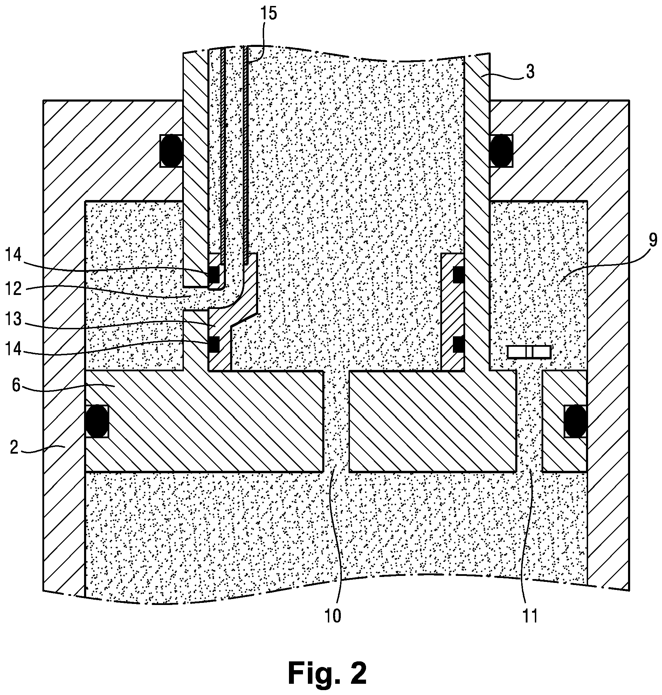

Selon l'invention, on réalise un perçage 12 de la paroi de la bouteille 3 au droit de la chambre de détente 9. Comme cela est plus particulièrement visible sur la figure 2, le perçage 12 est ici effectué légèrement au-dessus du diaphragme 6, sur lequel on a ici adapté une jupe 13 munie de deux joints d'étanchéité 14 s'étendant de part et d'autre du perçage pour coopérer avec la paroi interne de la bouteille. La jupe 13 comporte un port débouchant entre les deux joints d'étanchéité 14 pour recevoir l'extrémité d'un tuyau rigide 15 qui s'étend dans la bouteille 3 jusqu'à un bloc hydraulique 16 fixé à étanchéité au sommet de la bouteille 3 sur l'orifice de celle-ci qui sert habituellement à son gonflage.

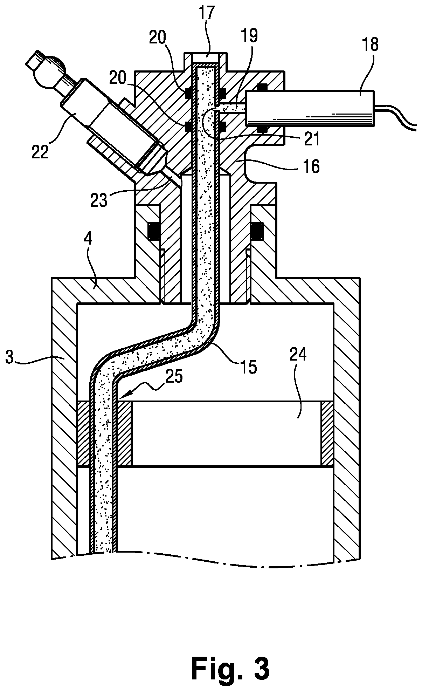

Comme cela est plus particulièrement visible à la figure 3, l'extrémité supérieure du tuyau 15 est engagée à étanchéité dans un alésage 17 du bloc hydraulique 16. Le bloc hydraulique 16 porte un capteur de pression 18 vissé à étanchéité dans un canal 19 qui débouche dans l'alésage 17 entre deux joints d'étanchéité 20 coopérant avec le tuyau 15 et entre lesquels s'étend un orifice 21 ménagé dans la paroi du tuyau 15. Ainsi, le capteur de pression 18 est mis en communication fluidique avec la chambre de détente 9 via le tuyau 15. Ici, le bloc hydraulique 16 porte une vanne de gonflage 22 vissée à étanchéité sur un canal 23 qui débouche dans l'alésage 17 sous les joints d'étanchéité 20, de façon à être en communication avec l'intérieur de la bouteille 3 pour permettre son gonflage à l'azote.

Le tuyau 15 est maintenu le long de la paroi interne de la bouteille 3 par un support annulaire 24, ici en matière plastique, ajusté sur la paroi interne de la bouteille 3 et comportant un passage 25 pour recevoir le tuyau 15. Cette disposition évite tout risque de collision du tuyau 15 avec une éventuelle aiguille de laminage (non représentée ici) solidaire de la tige coulissante 2 et traversant le diaphragme 6 pour saillir dans la bouteille 3.

Ainsi, au prix de modifications minimes (perçage de la bouteille au droit de la chambre de détente, adaptation d'une jupe sur le diaphragme, et mise en place d'un - petit- bloc hydraulique en haut de la bouteille pour recevoir un capteur de pression), il devient possible grâce à l'invention de mesurer la pression dans la chambre de détente.

L'invention n'est pas limitée à ce qui vient d'être décrit, mais englobe au contraire toute variante entrant dans le cadre défini par les revendications.

En particulier, bien que l'on ait ici fait déboucher le tuyau dans un bloc hydraulique portant à la fois le capteur de pression et une vanne de gonflage, ce qui permet de ne pas modifier l'extrémité supérieure de la bouteille, on pourra faire sortir le tuyau par un perçage spécifique de l'extrémité supérieure.

Le diaphragme 6 peut être agencé différemment.

Le tuyau 15 peut être fixé par tout moyen le long de la bouteille 3.

## Revendications

1. Procédé de mesure de pression dans un amortisseur d'atterrisseur d'aéronef à amortisseur encapsulé, l'amortisseur comportant une tige coulissante (2) montée à coulissement dans un caisson (1) de l'atterrisseur, et une bouteille (3) s'étendant à l'intérieur du caisson en étant fixée au caisson par une extrémité supérieure (4) et autour de laquelle coulisse la tige coulissante, la bouteille se terminant dans la tige coulissante par un diaphragme (6) qui délimite dans l'amortisseur une chambre d'huile (7) à l'intérieur de la tige coulissante, une chambre mixte (8) dans la bouteille, et une chambre de détente (9) s'étendant entre la tige coulissante et la bouteille, le procédé comportant l'étape d'effectuer un perçage (12) de la bouteille au droit de la chambre de détente, et de relier ce perçage à un capteur de pression (18) situé à l'extérieur du caisson au moyen d'un tuyau s'étendant dans la bouteille depuis le perçage jusqu'à l'extrémité supérieure de la bouteille pour mesurer une pression dans la chambre de détente.

2. Procédé selon la revendication 1, dans lequel on fait déboucher le tuyau au niveau d'un orifice dans l'extrémité supérieure (4) de la bouteille (3) servant à gonfler l'amortisseur, en équipant l'orifice d'un bloc hydraulique (16) adapté à recevoir le capteur de pression (18) et une vanne de gonflage (22).

3. Procédé selon la revendication 1, dans lequel on équipe le diaphragme d'une jupe (13) portant deux joints d'étanchéité (14) coopérant avec une paroi interne de la bouteille (3) de part et d'autre du perçage (12), le tuyau étant connecté à un port de la jupe débouchant entre les joints d'étanchéité.

4. Procédé selon la revendication 1, dans lequel on maintient le tuyau (15) le long d'une paroi interne de la bouteille (3) au moyen d'un support annulaire (24) ajusté sur la paroi interne de la bouteille et comportant un passage (25) pour recevoir le tuyau.

5. Atterrisseur d'aéronef à amortisseur encapsulé, l'amortisseur comportant une tige coulissante (2) montée à coulissement dans un caisson (1) de l'atterrisseur, et une bouteille (3) s'étendant à l'intérieur du caisson en étant fixée au caisson par une extrémité supérieure (4) et autour de laquelle coulisse la tige coulissante, la bouteille se terminant dans la tige coulissante par un diaphragme (6) qui délimite dans l'amortisseur une chambre d'huile (7) à l'intérieur de la tige coulissante, une chambre mixte (8) dans la bouteille, et une chambre de détente (9) s'étendant entre la tige coulissante et la bouteille, **caractérisé en ce qu'**un perçage (12) est ménagé dans la bouteille au droit de la chambre de détente, le perçage étant relié à un capteur de pression (18) situé à l'extérieur du caisson au moyen d'un tuyau s'étendant dans la bouteille depuis le perçage jusqu'à l'extrémité supérieure de la bouteille pour mesurer une pression dans la chambre de détente.

6. Atterrisseur selon la revendication 5, dans lequel le tuyau débouche dans l'extrémité supérieure (4) de la bouteille (3) au niveau d'un orifice servant à gonfler l'amortisseur, l'orifice étant équipé d'un bloc hydraulique (16) adapté à recevoir le capteur de pression (18) et une vanne de gonflage (22).

7. Atterrisseur selon la revendication 5 ou 6, dans lequel le diaphragme (6) est équipé d'une jupe (13) portant deux joints d'étanchéité (14) coopérant avec une paroi interne de la bouteille (3) de part et d'autre du perçage (12), le tuyau étant connecté à un port de la jupe débouchant entre les joints d'étanchéité.

8. Atterrisseur selon l'une quelconque des revendications 5 à 7, dans lequel le tuyau (15) est maintenu le long d'une paroi interne de la bouteille (3) au moyen d'un support annulaire (24) ajusté sur la paroi interne de la bouteille et comportant un passage (25) pour recevoir le tuyau (15).

## Patentansprüche

1. Verfahren zum Messen von Druck in einem Stoßdämpfer eines Luftfahrzeugfahrwerks mit gekapseltem Stoßdämpfer, wobei der Stoßdämpfer eine Gleitstange (2) umfasst, die in einem Kasten (1) des Fahrwerks verschiebbar gelagert ist, und einen Zylinder (3), der sich im Inneren des Kastens erstreckt, indem er am Kasten über ein oberes Ende (4) befestigt ist, und um den die Gleitstange gleitet, wobei der Zylinder in der Gleitstange durch eine Membran (6) endet, die in dem Stoßdämpfer eine Ölkammer (7) im Inneren der Gleitstange, eine Mischkammer (8) in dem Zylinder und eine Expansionskammer (9) definiert, die sich zwischen der Gleitstange und dem Zylinder erstreckt, wobei das Verfahren den Schritt des Herstellens einer Bohrung (12) in dem Zylinder an der Expansionskammer umfasst, sowie des Verbindens dieser Bohrung mit einem sich außerhalb des Kastens befindlichen Drucksensor (18) mittels eines Rohrs, das sich in dem Zylinder ab der Bohrung bis zum oberen Ende des Zylinders erstreckt, um einen Druck in der Expansionskammer zu messen.

2. Verfahren nach Anspruch 1, bei dem man das Rohr im Bereich einer Öffnung in dem oberen Ende (4) des Zylinders (3) münden lässt, die dazu dient, den Stoßdämpfer aufzublasen, indem man die Öffnung mit einem Hydraulikblock (16) versieht, der geeignet ist, den Drucksensor (18) und ein Aufblasventil (22) aufzunehmen.

3. Verfahren nach Anspruch 1, bei dem man die Membran mit einer Schürze (13) versieht, die zwei Dichtungen (14) trägt, die mit einer Innenwand des Zylinders (3) zu beiden Seiten der Bohrung (12) zusammenwirken, wobei das Rohr mit einer Öffnung der Schürze verbunden ist, die zwischen den Dichtungen mündet.

4. Verfahren nach Anspruch 1, bei dem man das Rohr (15) entlang einer Innenwand des Zylinders (3) mittels eines ringförmigen Trägers (24) hält, der an die Innenwand des Zylinders angepasst ist und einen Durchtritt (25) zur Aufnahme des Rohrs umfasst.

5. Luftfahrzeugfahrwerk mit gekapseltem Stoßdämpfer, wobei der Stoßdämpfer eine Gleitstange (2) umfasst, die in einem Kasten (1) des Fahrwerks verschiebbar gelagert ist, sowie einen Zylinder (3), der sich im Inneren des Kastens erstreckt, indem er am Kasten über ein oberes Ende (4) befestigt ist, und um den die Gleitstange gleitet, wobei der Zylinder in der Gleitstange über eine Membran (6) endet, die in dem Stoßdämpfer eine Ölkammer (7) im Inneren der Gleitstange, eine Mischkammer (8) in dem Zylinder und eine Expansionskammer (9) definiert, die sich zwischen der Gleitstange und dem Zylinder erstreckt, **dadurch gekennzeichnet, dass** eine Bohrung (12) in dem Zylinder an der Expansionskammer ausgebildet ist, wobei die Bohrung mit einem sich außerhalb des Kastens befindlichen Drucksensor (18) mittels eines Rohrs verbunden ist, das sich in dem Zylinder ab der Bohrung bis zum oberen Ende des Zylinders erstreckt, um einen Druck in der Expansionskammer zu messen.

6. Fahrwerk nach Anspruch 5, bei dem das Rohr in das obere Ende (4) des Zylinders (3) im Bereich einer Öffnung mündet, die dazu dient, den Stoßdämpfer aufzublasen, wobei die Öffnung mit einem Hydraulikblock (16) versehen ist, der geeignet ist, den Drucksensor (18) und ein Aufblasventil (22) aufzunehmen.

7. Fahrwerk nach Anspruch 5 oder 6, bei dem die Membran (6) mit einer Schürze (13) versehen ist, die zwei Dichtungen (14) trägt, die mit einer Innenwand des Zylinders (3) zu beiden Seiten der Bohrung (12) zusammenwirken, wobei das Rohr mit einer Öffnung der Schürze verbunden ist, die zwischen den Dichtungen mündet.

8. Fahrwerk nach einem der Ansprüche 5 bis 7, bei dem das Rohr (15) entlang einer Innenwand des Zylinders (3) mittels eines ringförmigen Trägers (24) gehalten wird, der an die Innenwand des Zylinders angepasst ist und einen Durchtritt (25) umfasst, um das Rohr (15) aufzunehmen.

## Claims

1. A method of measuring pressure in a shock absorber of an aircraft undercarriage having an encapsulated shock absorber, the shock absorber comprising a sliding rod (2) slidably mounted in a leg strut (1) of the undercarriage and an inner cylinder (3) extending inside the strut, the inner cylinder being fastened to the strut via a top end (4) and the sliding rod sliding around the inner cylinder, the inner cylinder being terminated inside the sliding rod by a diaphragm (6) that defines an oil chamber (7) in the shock absorber and inside the sliding rod, a mixed oil/gas chamber (8) in the inner cylinder, and an expansion chamber (9) extending between the sliding rod and the inner cylinder, the method comprising the step of making a hole (12) in the inner cylinder in register with the expansion chamber, and in using a pipe to connect the hole to a pressure sensor (18) situated outside the strut in order to measure pressure in the expansion chamber, the pipe extending inside the inner cylinder from the hole to the top end of the inner cylinder.

2. A method according to claim 1, wherein the pipe is caused to open out via an orifice in the top end (4) of the inner cylinder (3) that is used for inflating the shock absorber, by fitting the orifice with a hydraulic block (16) adapted to receive both the pressure sensor (18) and an inflation valve (22).

3. A method according to claim 1, wherein the diaphragm is fitted with a skirt (13) having two sealing rings (14) cooperating with an inside wall of the inner cylinder (3) on either side of the hole (12), the pipe being connected to a port of the skirt that opens out between the sealing rings.

4. A method according to claim 1, wherein the pipe (15) is held along an inside wall of the inner cylinder (3) by means of an annular support (24) fitted against the inside wall of the inner cylinder and including a passage (25) for receiving the pipe.

5. An aircraft undercarriage having an encapsulated shock absorber, the shock absorber comprising a sliding rod (2) slidably mounted in a leg strut (1) of the undercarriage and an inner cylinder (3) extending inside the strut, the inner cylinder being fastened to the strut via a top end (4) and the sliding rod sliding around the inner cylinder, the inner cylinder being terminated inside the sliding rod by a diaphragm (6) that defines an oil chamber (7) in the shock absorber and inside the sliding rod, a mixed oil/gas chamber (8) in the inner cylinder, and an expansion chamber (9) extending between the sliding rod and the inner cylinder, the undercarriage being **characterized in that** a hole (12) is made in the inner cylinder in register with the expansion chamber, and a pipe connects the hole to a pressure sensor (18) situated outside the strut in order to measure pressure in the expansion chamber, the pipe extending inside the inner cylinder from the hole to the top end of the inner cylinder.

6. An undercarriage according to claim 5, wherein the pipe opens out in the top end (4) of the inner cylinder (3) via an orifice that is used for inflating the shock absorber, the orifice being fitted with a hydraulic block (16) adapted to receive both the pressure sensor (18) and an inflation valve (22).

7. An undercarriage according to claim 5 or claim 6, wherein the diaphragm (6) is fitted with a skirt (13) having two sealing rings (14) cooperating with an inside wall of the inner cylinder (3) on either side of the hole (12), the pipe being connected to a port of the skirt that opens out between the sealing rings.

8. An undercarriage according to any one of claims 5 to 7, wherein the pipe (15) is held along an inside wall of the inner cylinder (3) by means of an annular support (24) fitted against the inside wall of the inner cylinder and including a passage (25) for receiving the pipe (15).
